# EUROPEAN PATENT SPECIFICATION

(11) **EP 1 162 839 B1**
(45) Date of publication and mention of the grant of the patent: **02.07.2008**
(21) Application number: 01304449.0
(22) Date of filing: 21.05.2001
(51) Int. Cl.: H04N 5/782

(54) **Recording reservation system and method**
Aufnahmereservierungssystem und -verfahren
Système et procédé de réserve d'enregistrement

(30) Priority: 09.06.2000 JP 2000173768
(43) Date of publication of application: 12.12.2001
(73) Proprietor: MATSUSHITA ELECTRIC INDUSTRIAL CO., LTD., Kadoma-shi, Osaka 571-8501 (JP)
(72) Inventor: Egusa, Yo, Kyoto-shi, Kyoto 612-0803 (JP); Sakatani, Tomohiko, Ashiya-shi, Hyogo 659-0086 (JP)
(74) Representative: Haley, Stephen

(56) References cited:
- EP-A- 0 940 985
- WO-A-99/57895
- US-A- 5 956 455

## Description

The present invention relates to technology for reservation recording a scheduled broadcast program.

Conventional video recorder can be programmed with time-shift recording information to record scheduled broadcast programs either manually (manual timer recording) or using program code reservation system.

Manual timer recording which is often referred to as "free-set" reservation recording requires the user to manually input the specific broadcast channel and scheduled broadcast times (both recording start and end times) in order to time-shift record a scheduled broadcast program. Specifically because the user directly enters the channel number and recording time, manual timer recording allows the user to directly set a recording reservation that is easy to understand.

With the program code reservation system, however, the user simply inputs a unique multiple digit number (i.e. a program code) to a video recorder by using remote controller in order to set timer recording. A program code represents an encoded channel number and an encoded broadcast times of a program to be time-shift recorded. The video recorder decodes the digit number to the channel number and broadcast time of the program. Such a program code is referred to as "G-code" in the specification. Reservations using G-codes are thus even simpler than manual timer recording reservations because the user only enters one multiple digit number.

The possibility that a recording reservation will be incorrectly programmed is greater with manual timer recording because the user specifically and directly inputs both the channel number and broadcast time information. Programming errors are also not obvious to the user because it is difficult to know from the channel number and broadcast time information alone what broadcast program has been set for time-shift recording.

Furthermore, recording only continues from the programmed recording start time to the programmed end time with manual timer recording. This means that there are cases in which it is not possible to record only the desired broadcast program. This obviously occurs when the recording reservation is incorrectly programmed, and can also happen even when the reservation is correctly programmed. For example, if the recording reservation has been set to record a live broadcast of a baseball game and the baseball game is extended, the recording reservation will not know that the game was extended and will stop recording at the programmed end time. If the recording reservation has been set to record a program following a live broadcast of a baseball game and the baseball game is extended, the recording reservation will start recording the unwanted end of the baseball game and end recording part way through the desired program.

Compared with manual timer recording, the G-code reservation system is less susceptible to programming errors. The G-code, however, only encodes the channel number and scheduled broadcast times, and G-code reservations are therefore identical to manual timer recordings in that they program only the channel number and broadcast time information. It is therefore again not easy to know what broadcast program is scheduled to be recorded, and recording again only happens between the programmed start and end times. G-code reservations are therefore also identical to manual timer recordings in that they cannot automatically cope with changes in the broadcast time.

US5956455A discloses a video cassette recorder combining VPS (Video Program System) which incorporates a program code into the television signal to identify the currently broadcast program, and VPT (VCR Programmed by Teletext) in which information from the program pages of the Teletext service are automatically transferred to the VCR to set it up for recording. EP0940985A discloses a digital multimedia recorderwhich extracts program information from amongst audio and video information in a television signal.

The present invention was conceived with consideration for the aforementioned problems. It is accordingly an object of this invention to provide a recording reservation system and method for reliably recording a broadcast program that the user wants to record irrespective of whether the user programs the recording reservation using the familiar, easy-to-understand manual timer recording method or G-code timer recording method. It is another object of the invention to provide a recording reservation system and method for reducing errors in manual timer recording reservations.

In a first aspect, the invention consists in a recording reservation system comprising:
a receiver apparatus and a recorder apparatus which are connected through a communication interface,
wherein said receiver apparatus comprises:
a decoder unit for decoding a transport stream (TS) containing video data, audio data, and control data for a broadcast program, and extracting therefrom the control data and the video and audio data;
a program information extracting unit for extracting program information from the control data extracted by the decoder unit;
a first communication interface unit for transmitting data including the extracted program information to said recorder apparatus, and for receiving data from said recorder apparatus; and
an OSD (On Screen Display) unit for generating a video display signal including video data and a part of the program information for the reservation program, and outputting the video display signal to a display unit,
wherein said recorder apparatus comprises:
a second communication interface unit for receiving data including the extracted program information from the first communication interface unit of said receiver apparatus, and for transmitting data to said receiver apparatus;
a storage unit for storing a program list containing a plurality of program information, each program information including a scheduled broadcast time for a scheduled broadcast program and an event ID for the program, the event IDbeing predetermined by a broadcast station before broadcasting and which identifies the scheduled broadcast program;
a reservation input unit for a user to input reservation information identifying a scheduled broadcast time by time information to enable time-shift recording of a scheduled broadcast program as a reservation program;
a reservation manager for extracting program information for the reservation program based on the program list and reservation information;
a recording manager for monitoring the event ID of a scheduled broadcast program, recording the broadcast program as the reservation program based on the monitored results, and transmitting data including a part of the program information for the reservation program, through the second and first communication interfaces to the OSD unit, thereby displaying the part of the program information on the display unit.

In a second aspect, the invention consists in a recording reservation method for use in a recording reservation system having a receiver apparatus and a recorder apparatus which are connected through a communication interface, the method comprising the steps of:
in said receiver apparatus,
   decoding a transport stream containing video data, audio data, and control data for a broadcast program, and extracting therefrom the control data and the video and audio data;
   extracting program information from the control data;
   transmitting data via a first communication interface unit including the extracted program information to said recorder apparatus, and receiving data from said recorder apparatus; and
   generating a video display signal including video data and a part of the program information for the reservation program, and outputting the video display signal to a display unit, and
in said recorder apparatus,
   receiving data via the second communication interface unit including the extracted program information from the first communication interface unit of said receiver apparatus, and transmitting data to said receiver apparatus;
   storing a program list containing a plurality of program information, each program information including a scheduled broadcast time for a scheduled broadcast program and an event ID for the program, the event ID being predetermined by a broadcast station before broadcasting and which identifies the scheduled broadcast program;
   inputting reservation information identifying a scheduled broadcast time by time information to enable time-shift recording of a scheduled broadcast program as a reservation program;
   extracting program information for the reservation program based on the program list and reservation information; and
   monitoring the event ID of a scheduled broadcast program, recording the broadcast program as the reservation program based on the monitored results, and transmitting data including a part of the program information for the reservation program, through the second and first communication interfaces to the display unit thereby displaying the part of the program information.

Operation of this invention is described below. The display part or display step of this invention displays program information for the reservation program. The displayed program information is information relating to the broadcast channel, broadcast date and time, and title of the reservation program. The user can therefore confirm the title and other information about the reservation program even when a recording reservation is programmed by specifying the broadcast time. Programming errors can therefore be prevented.

The reservation manager or reservation management step of this invention monitors the event ID of a broadcast program about to start based on a program list and recording reservation information, and based on the monitored results records the broadcast program that is about to start. The recording reservation information is information whereby a user specifies the scheduled time and date of a desired program using time information to enable time-shift recording of a scheduled broadcast. The reservation manager or reservation management step thus changes a recording reservation based on scheduled broadcast time information to a recording reservation based on an event ID. It is therefore possible to set a recording reservation for a program by specifying the scheduled broadcast time, and have the program that the user wants to record be reliably recorded even if the actual broadcast time of the desired program changes.

A comparative embodiment and a particular embodiment in accordance with this invention will now be described with reference to the accompanying drawings; in which:-
Fig. 1 shows the transport stream configuration;
Fig. 2 shows the configuration of a program association table PAT;
Fig. 3 shows the configuration of the program map table PMT;
Fig. 4 shows the configuration of the event information table EIT;
Fig. 5 shows a recording reservation system;
Fig. 6 is a block diagram showing the configuration of the recorder shown in Fig. 5;
Fig. 7 is a flow chart of process for generating a program list;
Fig. 8 is a flow chart of recorder operation for setting a recording reservation;
Fig. 9 is a flow chart of recorder operation for recording; and
Fig. 10 shows a configuration of a recording reservation system having a recorder without a built-in set-top box and a separate set-top box according to the present invention.

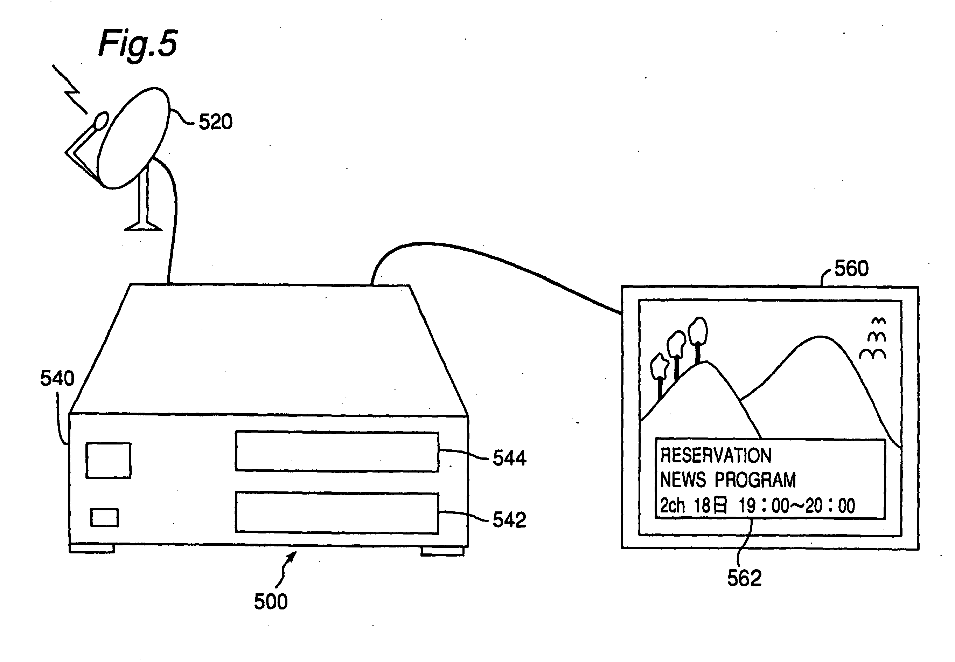

Fig. 5 shows a recording reservation system 500. This recording reservation system 500 is a system for time-shift recording digital broadcast programs, i.e. for recording reserved digital broadcast programs. The recording reservation system 500 has an antenna 520 for receiving digital broadcasts, a recorder 540 for managing recording reservations and recording a program received by the antenna 520 to a video tape cassette inserted from cassette opening 544, and a TV 560 for outputting the audio portion and displaying the video portion of a program. The broadcast program can be live or a reproduced recording.

Operation of this recording reservation system 500 is described below. Digital broadcast signals contain control data in addition to the audio and video data. This control data relates to the program information, which contains the channel number, broadcast times (start and end times), title, and an event ID for identifying this other information with a specific program scheduled for broadcasting. The recorder 540 of this recording reservation system 500 extracts this program information from the digital signal received from the antenna 520, and stores the information for plural programs as a program list. The recorder 540 searches the program list for the channel number and broadcast time of a reservation program to extract the corresponding reservation program. Note that recording reservations can be programmed manually or using the G-code reservation system. The recorder 540 gets the title from the extracted program, and displays the title together with the channel number and broadcast time in the on-screen display 562 area. Note that the on-screen display 562 is superimposed on the program currently being received and displayed on the TV 560.

It is therefore possible for the user to confirm the program title as well as the channel number and broadcast time to prevent errors in the reservation program. It will also be noted that this recording reservation information can be displayed on the display 542 of the recorder 540 instead of the on-screen display 562.

The recorder 540 also extracts the event ID of the searched reservation program, and monitors the event ID of the program being broadcast. If the event ID of the broadcast program matches the event ID of the recording reservation information, the recorder 540 starts recording the program being broadcast. The recorder 540 continues recording to the end of the program having that event ID.

It is therefore possible to reliably record a reservation program desired by the user even if there is a change in the scheduled broadcast time. Program recording can also be continued if the broadcast time of the desired program is extended.

The configuration of the digital signal transport stream (also indicated as TS below), that is, the basic structure of the digital signal, is described next below before describing the internal configuration of the recorder 540.

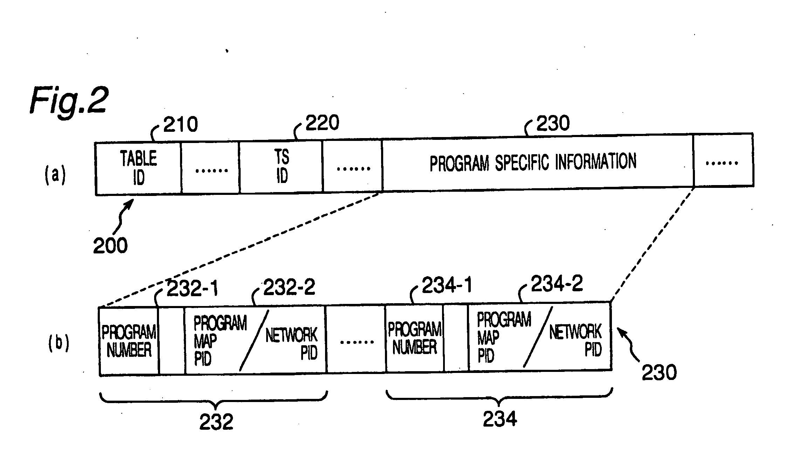

Plural transport streams are simultaneously received by the antenna 520 (Fig. 5), and are identified by a transport stream ID (TSID) 220 (Fig. 2). Each transport stream contains time-division multiplexed information for plural (five in this embodiment) channels.

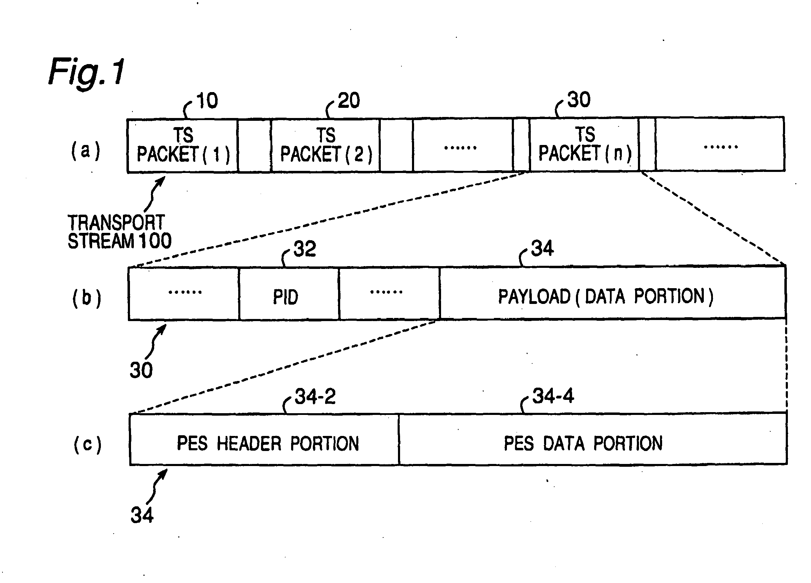

Fig. 1 (a) shows the configuration of transport stream TS 100. As shown in Fig. 1 (a), transport stream TS 100 contains plural transport stream packets TS packet (1) 10, TS packet (2) 20, ... TS packet (n) 30. Each transport stream packet is a block of data for transmitting information and contains video data, audio data, and control data. As noted above, the control data is data other than the video data and/or audio data (A/V data below) . The A/V data and the control data can be data belonging to plural channels. It should be noted that the data size of each transport stream packet is 188 bytes under the MPEG-2 encoding scheme.

Fig. 1 (b) shows the configuration of TS packet (n) 30. Each TS packet (n) 30 contains a packet identifier PID 32 and a payload 34. The packet identifier PID 32 identifies each transport stream packet; the payload 34 stores the transmitted program data. A 0, for example, is assigned to the packet identifier PID 32 for the program association table PAT of the program specific information PSI, and XX, for example, is appended to the packet identifier PID 32 for the program map table PMT of program number (channel number) X. The program specific information PSI, program association table PAT, and program map table PMT are described further below.

Fig. 1 (c) shows the configuration of a packetized elementary stream PES stored to the payload 34. Each packetized elementary stream PES contains a PES header 34-2, which defines PES attributes, for example, and PES data block 34-4. The PES data block 34-4 stores primarily A/V data. Alternatively, however, the PES data block 34-4 can store the program association table PAT, the program map table PMT, a network information table NIT, and conditional access table CAT of the program specific information PSI further described below, or the service information SI event information table EIT. It should be noted that the program specific information PSI and event information table EIT are equivalent to the control data in this embodiment.

A procedure for extracting packets associated with a desired program (program number (channel number) X) using the program specific information PSI is described briefly below before describing program association table PAT, program map table PMT, and event information table EIT of the program specific information PSI.

First, the program association table PAT is searched irrespective of the program number. Because a 0, for example, is assigned to the packet identifier PID 32 of the program association table PAT, it is only necessary to find packets containing that packet identifier PID 32. The program association table PAT stores each program number and the packet IDs PID of the program map table PMT of each program corresponding to that program number. It is therefore possible to obtain the packet ID PID (= XX) of the program map table PMT for program number X based on program number X and the program association table PAT. Packets assigned PID = XX are then extracted to obtain the program map table PMT for program number X. The packet IDs PID of the packets storing the A/V data for each program are stored for each program in the program map table PMT. For example, the packet ID PID of the video data for program number X is PID = XV, and the packet ID for the audio data is PID = XA. Using the packet IDs thus obtained for the audio and video data, the packets storing the A/V data for the desired program can be extracted.

The program association table PAT, program map table PMT, and event information table EIT of the program specific information PSI are each described next below.

The configuration of PES data block 34-4 (Fig. 1) when the PES data block 34-4 is the program association table PAT 200 of program specific information PSI is described first with reference to Fig. 2.

As noted above, the program association table PAT 200 stores each program number, and the packet IDs PID of the program map table PMT and other data for each program corresponding to a particular program number. Note that a fixed value, such as 0 above, is assigned as the PID of the program association table PAT 200.

Referring to Fig. 2 (a), the program association table PAT 200 contains a table identifier (table ID) 210, transport stream identifier TSID 220, and program-specific information 230. The table ID 210 stores a table type identifier, such as 0x00 (hexadecimal), identifying the program association table PAT. If the table ID is 0x00 (hexadecimal), the associated table can be identified as a program association table PAT. TSID 220 identifies the current transport stream, and thus makes it possible to individually identify plural transport streams. The program-specific information 230 indicates the packet ID PID of the program map table PMT corresponding to each program number.

This configuration is described in further detail below with reference to Fig. 2 (b).

The program-specific information 230 contains first program data 232 to n-th program data 234. Each program data unit contains a program number 232-1, 234-1 identifying each channel, and program map packet identifier (packet ID PID for program map table PMT) or network identifier (network PID) 232-2, 234-2 for the program number. Which packets must be found to obtain the program map table PMT for a particular program can be known from the packet ID PID of the program map table PMT. It should be noted that network PID 232-2, 234-2 contains the PID of the network information table NIT for a program number of a specific value, such as 0 in this example.

The network information table NIT is a table containing physical information about the transmission path. For example, if a program is broadcast via satellite, the network information table NIT contains the satellite orbit, deflection, and frequency data for each transponder (stream) . Using this table, another transport stream can be received from one transport stream TS 100 (Fig. 1).

The configuration of PES data block 34-4 (Fig. 1) when the PES data block 34-4 is program map table PMT 300 of program specific information PSI is described next below.

The program map table PMT 300 shows the packet IDs PID of the packets in the video, audio, and other data streams constituting a program for each program number. As noted above, the packet ID PID of program map table PMT 300 is written to the program map packet identifier (packet ID for the program map table PMT) 232-2, 234-2 in the program association table PAT 200 (Fig. 2).

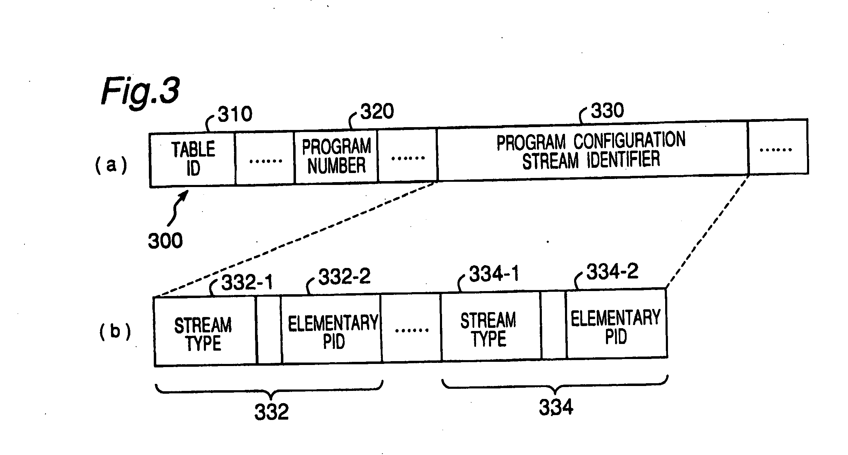

As shown in Fig. 3 (a), the program map table PMT 300 contains table identifier (table ID) 310, program number 320, and program configuration stream identifier 330. The table ID 310 stores a table type identifier, such as 0x02 (hexadecimal), identifying the program map table PMT. If the table ID is 0x02 (hexadecimal), the associated table can be identified as a program map table PMT. A program number 320 is assigned to each program. The program configuration stream identifier 330 is for identifying the video, audio, and other data streams constituting each program.

This configuration is described in further detail below with reference to Fig. 3 (b) . The program configuration stream identifier 330 contains first program configuration 332 to n-th program configuration 334. Each program configuration stream identifier contains a stream type 332-1, 334-1 identifying the video, audio, and other streams of each program, and the packet IDs PID 332-2, 334-2 of the packets storing the stream data. For example, a stream type 332-1 of 0x02 (hexadecimal) indicates that the video data is MPEG-2 video data; a stream type 332-1 of 0x04 (hexadecimal) identifies an MPEG-2 audio stream. The program map table PMT can thus be used to find the packet IDs PID of the video data, audio data, and control data for a specific program number in transport stream TS 100 (Fig. 1).

As noted above the program specific information PSI also contains a conditional access table CAT (not shown in the figure) . The conditional access table CAT contains the packet ID PID carrying the encryption key information needed to unscramble pay-per-view and subscriber broadcasts. A packet ID of 1, for example, is assigned to the packet ID PID for the conditional access table CAT.

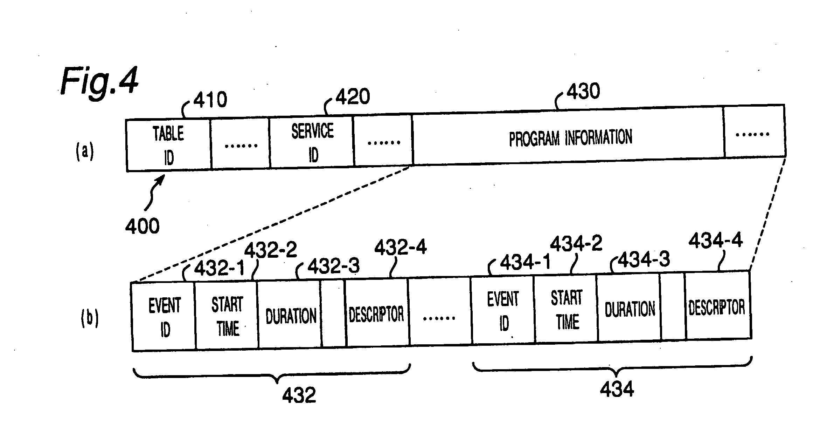

The configuration of PES data block 34-4 (Fig. 1) when the PES data block 34-4 is event information table EIT is described next with reference to Fig. 4.

The event information table EIT stores the event identifier (event ID) for each program, the broadcast time (start and end times) for each program, and the title of each program. The event information table EIT may contain information only for the program currently being broadcast and the program following thereafter, or it may contain information for all scheduled broadcasts from the present to some other future time, such as all broadcasts over the next eight days. The event information table EIT is referred to as event information table EIT(actual) in the former case, and is used to determine whether a reservation program is now being broadcast, that is, for determining when recording is to start and end. The event information table EIT is referred to as event information table EIT(schedule) in the latter case, and is used to compile a program list containing information for plural programs. Note that "event information table EIT" is used below unless it is necessary to distinguish event information table EIT(actual) and event information table EIT(schedule).

The event information table EIT is continuously repeated in the transmitted transport stream TS 100 (Fig. 1). Due to differences in the data size, however, event information table EIT(actual) can be transmitted in relatively short time and is thus sent every 5 seconds, for example. Event information table EIT(schedule) takes a relatively long time to transmit. A fixed value is preassigned as the packet ID of the event information table EIT.

Referring to Fig. 4 (a), the event information table EIT contains table ID 410, service ID 420, and program information 430.

The table ID 410 identifies the table type. A value of 0x4E (hexadecimal), for example, identifies an event information table EIT(actual), and values 0x50 to 0x57 (hexadecimal), for example, identify event information table EIT(schedule). The service ID 420 is used to distinguish this service from another service in the transport stream TS 100 (Fig. 1), and normally contains the program channel number (program number) . The service ID 420 is therefore equal to the program number 320 (Fig. 3) of the corresponding program map table PMT 300.

As shown in Fig. 4 (b), program information 430 contains first event-specific information 432 to n-th event-specific information 434. The number of event-specific information blocks is the number of programs on one channel. The first event-specific information 432 contains event ID 432-1 identifying the individual scheduled broadcasts, start time 432-2 for each program, duration 432-3, and descriptor 432-4 storing the program title or other descriptive information. The n-th event-specific information 434 is similarly structured. The start time 432-2 is specified in Japan Standard Time (JST) and the Modified Julian Day (MJD) in this embodiment. The duration 432-3 indicates the length of a program in hours, minutes, and seconds. For example, a duration 432-3 of 1 hour 45 minutes 30 seconds is stored as 0x014530 (hexadecimal) . If a recording reservation is programmed manually, the program broadcast at the specified time can be identified using this event information table EIT. The program title can therefore also be displayed, and if the program broadcast time changes the event-specific information 432 can be kept current by simply changing the start time 432-2.

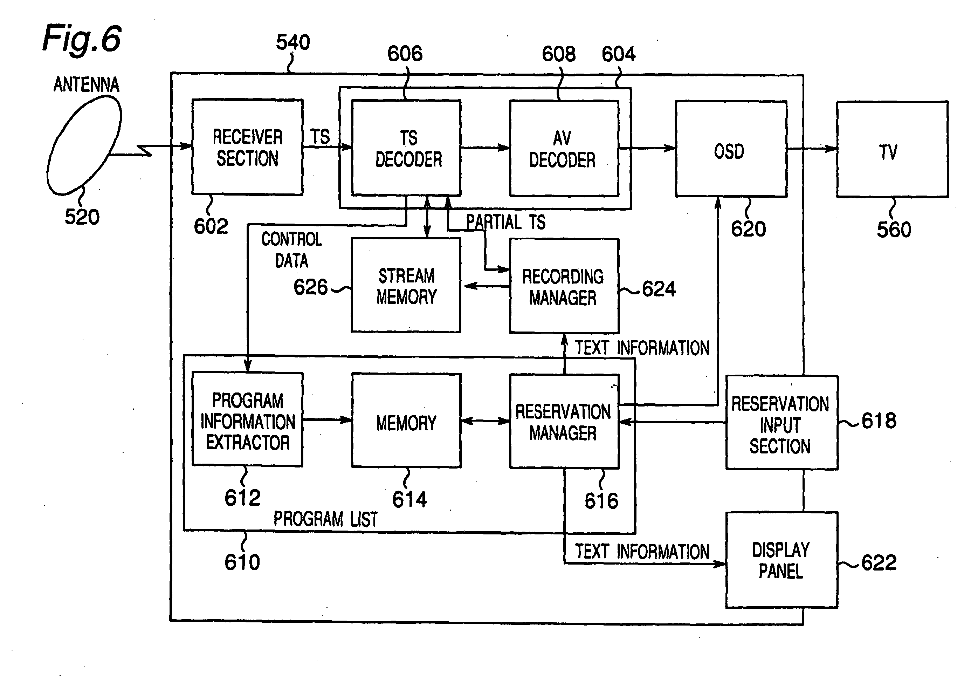

The configuration and operation of a recorder 540 (Fig. 5) are described next. Fig. 6 is a block diagram of the recorder 540. This recorder 540 is described below as a recorder with a built-in set-top box for receiving digital broadcasts. It will be obvious to one with ordinary skill in the related art that the process described below is in practice the same whether this set-top box is built in to the recorder 540 or is a separate device. The recorder 540 has a receiver section 602, decoder 604, processor 610, reservation input section 618, and both an on-screen display 620 and display panel 622 as display units. These various parts are further described below.

The receiver section 602 selectively receives and passes to the decoder 604 one transport stream from among the plural transport stream TS 100 (Fig. 1) received by the antenna 520 (Fig. 5).

The decoder 604 performs a process to decode the transport stream TS 100 (Fig. 1). "Decode" has two meanings as used herein. First, decoding separates the plural types of information, such as video data, audio data, and control data, multiplexed to the transport stream. Second, decoding reverses the encoding of data that has been mathematically coded to reduce the data size. These processes are respectively performed by the TS decoder 606 and AV decoder 608 that are part of decoder 604. The TS decoder 606 separates the required information from the transport stream TS 100 (Fig. 1) received from receiver section 602. It will be remembered that the transport stream TS 100 (Fig. 1) contains plural types of multiplexed data. The TS decoder 606 then sends the extracted control data to processor 610, and outputs the isolated A/V data to the AV decoder 608.

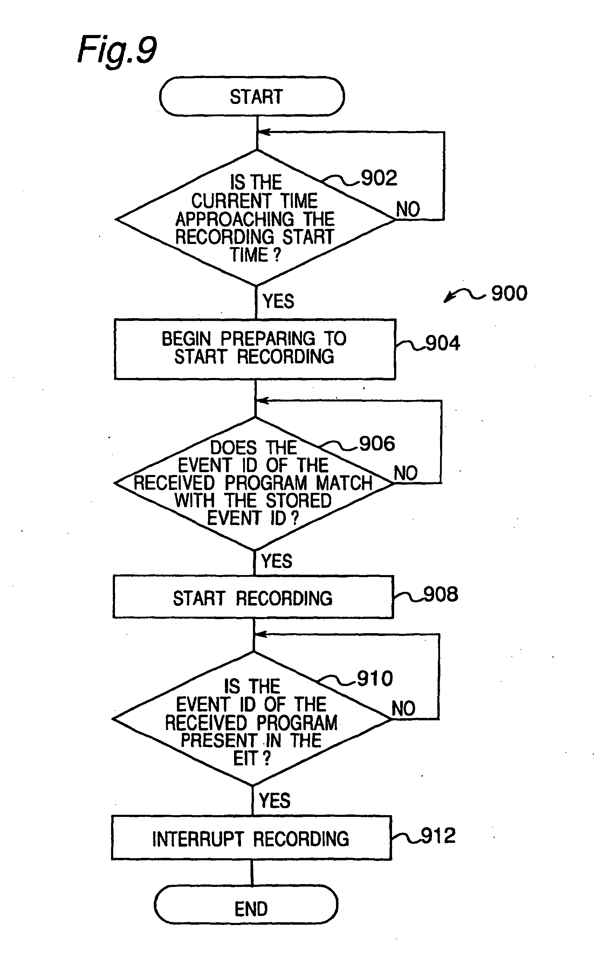

The processor 610 runs a process for programming recording reservations, and has a program information extractor 612, memory 614, and reservation manager 616. The program information extractor 612 receives the control data, extracts program information 430 (Fig. 4) for plural programs from the control data, and stores the program information 430 as a program list to memory 614. Memory 614 can be volatile or nonvolatile semiconductor memory or other type of storage. The reservation manager 616 receives the channel information and scheduled broadcast time information from the reservation input section 618. Based on the program list stored to memory 614 and the input channel information and scheduled broadcast time information for the reservation program, the reservation manager 616 identifies the event ID and title of the reservation program. More specifically, the reservation manager 616 looks for a match between the scheduled broadcast time of the reservation program (the broadcast start time and duration) and the start time 432-2 and duration 432-3 (Fig. 4) information in the program list. It then simply determines the event ID and title of the matching program list entry. As a result, the reservation manager 616 can display the program title together with the channel number and broadcast time of the reservation program on the display unit, that is, on-screen display 620 and display panel 622. The reservation manager 616 also sends the identified event ID and service ID 420 (Fig. 4) for the reservation program to the recording manager 624. Information relating to the reservation program start time can also be sent to the recording manager 624 at this time for the recording manager warm-up operation described below with reference to Fig. 9.

The reservation input section 618 is an input device used by the user to input program reservation information identifying the broadcast channel and scheduled broadcast time using time information, and is typically a television's remote control, keyboard, or similar device.

The recording manager 624 receives the event ID and service ID 420 (Fig. 4) for the reservation program, as well as information relating to the start time of the reservation program when necessary. Based on the service ID 420 (Fig. 4), recording manager 624 selects the appropriate channel, and then monitors a match between the event ID of the reservation program and the event ID in the event information table EIT(actual) (Fig. 4) currently decoded by the TS decoder 606. If there is a match, that is, if broadcasting the reservation program has begun, recording manager 624 begins recording. Later when there is no longer a match, recording manager 624 determines that broadcasting the reservation program has ended and therefore interrupts (stops) recording. Note that "recording" here means to accumulate the reservation program streams in stream memory 626. The entire program selected for recording, such as a movie, is therefore recorded to stream memory 626.

Stream memory 626 can be a video tape, hard disk, or other type of magnetic storage medium, a magneto-optical storage medium such as a DVD-RAM or DVD-R, CD-R, CD-RW, semiconductor recording medium, or other type of medium.

The display unit, which is on-screen display 620 or display panel 622 in this embodiment, performs a process for displaying the reservation program settings on the on-screen display 620 or display panel 622 (such as an LCD) as text information based on part of the program information (such as the title of the reservation program) . The on-screen display 620 displays the text information on the TV 560 superimposed to the current broadcast program (the program being viewed) . The program being viewed is the A/V data sent from the TS decoder 606 to the AV decoder 608, decoded by the AV decoder 608, and already displayed as a video program.

### Operation of the recorder 540 is described next.

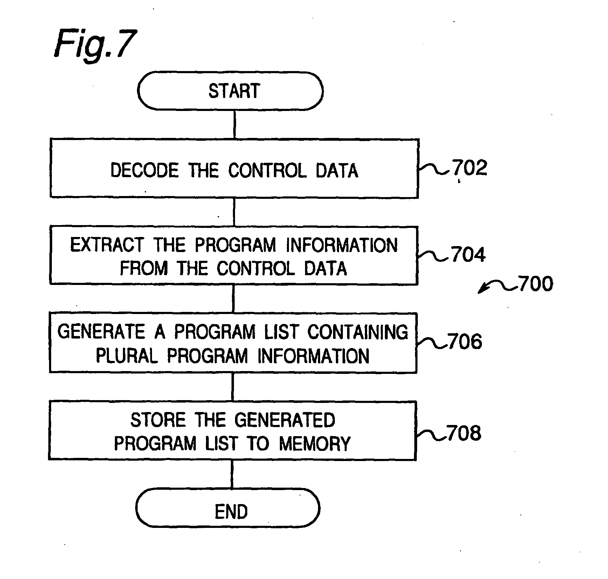

Before accepting a reservation program setting from the user, recorder 540 captures and stores from the transport stream TS 100 (Fig. 1) a program list containing the future scheduled programs. An operation for generating this program list is described below with reference to Fig. 7.

Fig. 7 is a flow chart 700 of the program list generating process. First, TS decoder 606 of recorder 540 decodes the control data from the transport stream TS 100 (Fig. 1) passed from the receiver section 602 (step 702) . This control data is information other than the A/V data. More specifically, the control data is the program specific information PSI and service information SI, and is information used to control reproducing transport stream TS 100 (Fig. 1). The control data can therefore be decoded by searching for the packet identifier PIDs 32 of the program specific information PSI and service information SI (Fig. 1). The decoded control data is output to program information extractor 612.

The program information extractor 612 receives the control data and extracts therefrom the program information 430 (Fig. 4) (step 704) . Program information can be extracted by finding the packet identifier PID 32 (Fig. 1) for the event information table EIT. The program information extractor 612 generates a program list containing plural program information 430 (Fig. 4) (step 706), and stores the generated program list to memory 614 (step 708) . To simplify the subsequent process, a program list grouping text information for the program channel number, broadcast time, and title based on program information 430 as a single unit of information can be stored to memory 614. The recorder 540 thus stores the program list to memory 614 before continuing operation.

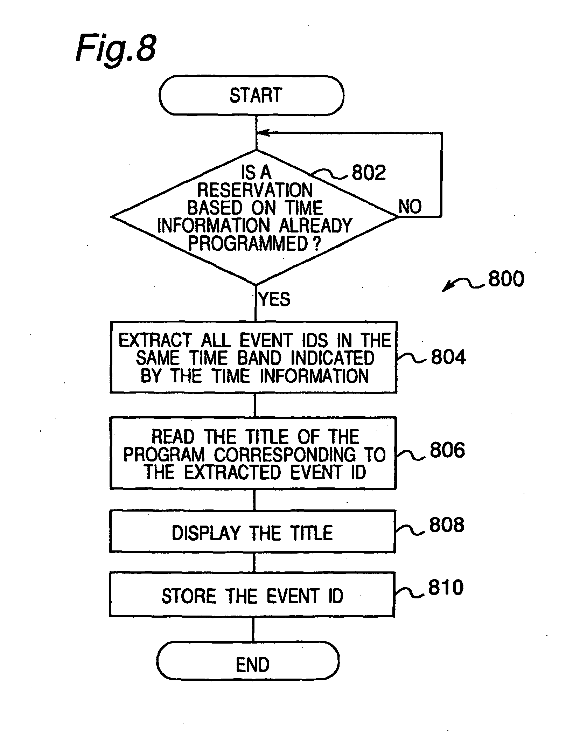

The process performed when recorder 540 (Fig. 6) accepts a reservation program setting from the user is, essentially, a process for converting a manual timer recording reservation to a reservation based on an event ID. The process performed by recorder 540 when programming a timer reservation is described next with reference to Fig. 8. Fig. 8 is a flow chart 800 of the process performed by recorder 540 when programming a timer reservation.

The recorder 540 first checks whether a reservation based on time information is already programmed (step 802) . "Time information" as used herein indicates the broadcast time of a program set for recording reservation either directly or indirectly. Entering this time information "directly" indicates below that the broadcast time is directly entered by the user as with manual timer recording reservations. "Indirectly" as used herein means the user enters information encoding the broadcast time, such as with the G-code reservation system, rather than entering the time itself. If a reservation based on time information is not detected, step 802 repeats until there is.

If the user has programmed a recording reservation by inputting time information specifying the scheduled broadcast time and channel information (referred to below as the "recording reservation information"), the reservation manager 616 accepts the recording reservation information and, using the broadcast channel number and time information, searches the program list stored to memory 614.

As a result of this search, reservation manager 616 extracts all event IDs and service IDs in the same time band indicated by the time information (step 804) . This is because if the user manually programs a recording reservation for a group of plural temporally consecutive programs, recording must continue for longer than the duration of the first program, and the reservation manager 616 must include the event ID of the next program (and the event ID following thereafter if appropriate, and so on) in the list of event IDs to monitor. Searching is based on the user-entered channel number and time information of the recording reservation. The program event ID and service ID are then identified from the program list stored to memory 614 so that they can also be managed. "Managed" as used herein is further described below.

When the reservation manager 616 extracts the event ID and service ID, it reads the title of the program corresponding to the event ID (step 806), and sends the title on the on-screen display 620 or display panel 622 for display (step 808).

This makes it possible to confirm a recording reservation using the program title, an accomplishment that is not possible with conventional manual timer recording reservations, and thereby avoid user programming errors. It will also be obvious that the display can show more than just the program title. Based on the program list and recording reservation information, the display could also show the time and date of the recording, the scheduled broadcast time and the channel of the program to be recorded. The extracted event ID and service ID are sent to recording manager 624 and stored to an internal buffer (not shown in the figure) or other storage device (step 810).

As described above, the service ID is normally the channel number (program number) of the program. It is therefore possible at the start of recording to capture the program association table PAT 200 (Fig. 2) and program map table PMT 300 (Fig. 3) using this service ID, and extract the packet IDs PID of the A/V data needed for recording. It should be noted that there could be plural A/V data in a transport stream TS. Therefore, to select the A/V data needed for recording from the plural A/V data, the packet IDs PID can be recorded when the recording reservation is set. This operation can be set by the user as desired, or automatically by the reservation manager 616 or recording manager 624. Whichever method is used, the packet IDs PID for the A/V data required for recording are stored to memory 614 or an internal buffer (not shown in the figure).

"Managing" the event IDs and service IDs as noted above means monitoring whether the event ID of a program currently being broadcast (or at the starting time of the broadcast) matches the event ID of a recording reservation. This operation is accomplished when recording based on an event ID.

Fig. 9 shows a flow chart 900 of the recorder 540 for recording. The recording manager 624 of recorder 540 first detects whether the current time is approaching the recording start time (step 902). In this embodiment recording manager 624 detects if the current time is 5 minutes before the program starts. The recording start time is the time entered by the manual timer recording reservation or G-code reservation, that is, the broadcast start time of the recording reservation sent from reservation manager 616 to recording manager 624. Step 902 repeats if the current time is not equal to 5 minutes before the start time.

When the time is 5 minutes before the start time, recording manager 624 begins preparing to start recording (step 904). "Preparing to record" refers to preparing to record to video tape by, for example, warming up the motor. Operation is thus controlled because the processing overhead of the recorder 540 increases when monitoring is continuous, a recording start command could be suddenly received by the recording manager 624 as a result of monitoring, and there may not be time to warm up the motor that drives the tape, for example. This could cause the start of recording to be delayed from the start of the program. The recording manager 624 therefore prepares for recording by using the recording start time input by a manual timer recording reservation or G-code reservation as a guide to when recording starts.

Furthermore, the timing of "5 minutes before" as noted above is also used by way of example only, and this time will be adjusted appropriately according to the time needed to prepare for recording. This assures that recording will be accomplished reliably as desired by the user.

The event information table EIT(actual) also contains the event ID of the next program in addition to the event ID of the program currently being broadcast. It is therefore possible to monitor the event ID of the next program to detect when recording is about to begin, and use this information to start the warm-up process. It should be noted that steps 902 and 904 can be omitted if there are no practical problems caused by starting recording without warming up.

Next, recording manager 624 monitors a match between the stored event ID and the event ID of the received program (step 906) . The event ID of the received program is the event ID of the program being broadcast, and is extracted from the event information table EIT(actual) by way of TS decoder 606 and program information extractor 612. This step is an operation whereby the recording manager 624 starts monitoring the event ID of the current broadcast program because the scheduled recording start time is approaching. If monitoring does not detect a match, the reservation program is not being broadcast yet and monitoring therefore continues. If there is a match, broadcasting the reservation program has started, and recording manager 624 records (step 908). The recording manager 624 records by telling the TS decoder 606 what program number and information to extract from the transport stream TS 100 (Fig. 1) based on the program map table PMT 300 (Fig. 3). The TS decoder 606 thus isolates the corresponding A/V data, for example, and outputs it to the stream memory 626 as a partial transport stream. The stream memory 626 then stores, that is, records this information.

Recording ends when the current event ID being recorded disappears from the event information table EIT(actual). Monitoring if the event ID of the received program is present in the event information table EIT(actual) continues during recording (step 910). Recording continues for as long as the event ID is in the event information table EIT(actual). When it is not, that is, when the event ID disappears from the event information table EIT, recording manager 624 interrupts recording (step 912) and recording ends.

By thus converting a manual timer recording reservation or G-code reservation to a reservation using an event ID, recording can be automatically adjusted to the actual program start and end times even when the broadcast time changes, and programs that the user wants to record can be reliably recorded.

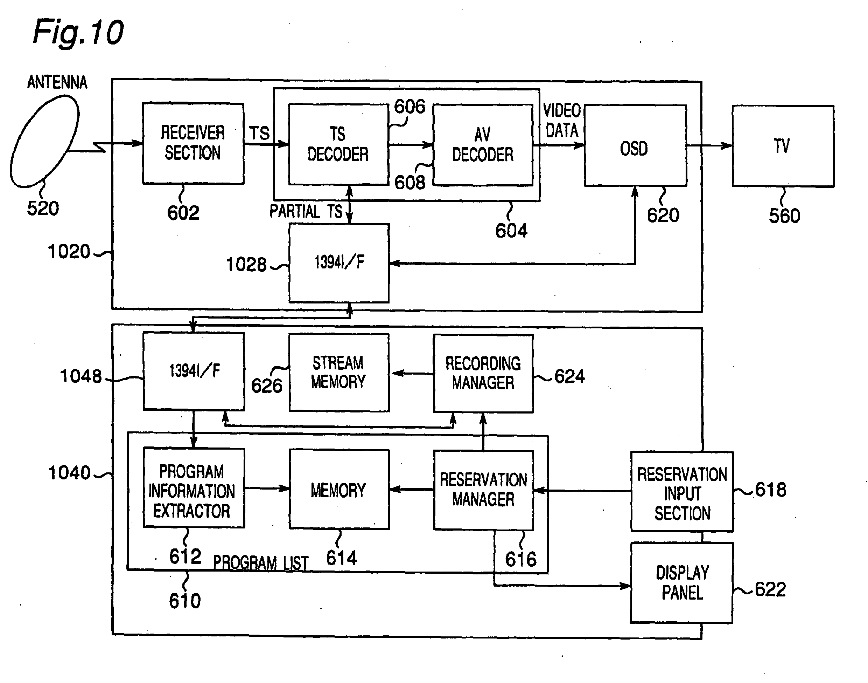

As noted above, the recorder 540 is assumed to have a built-in set-top box in the above embodiment. The above explanation still applies, however, even when the set-top box is not contained in the recorder 540 and is a separate device. Fig. 10 shows a configuration in accordance with the invention in which the set-top box 1020 is not built in to the recorder 1040. Communication between set-top box 1020 and recorder 1040 is through IEEE 1394 interfaces 1028 and 1048, for example. More specifically, IEEE 1394 interfaces 1028 and 1048 are used to send and receive information between TS decoder 606 or on-screen display 620 and processor 610 or stream memory 626. Except for this difference, all other aspects of the configuration and operation of this variation are identical to the configuration and operation described above with reference to Fig. 6. It should be noted that when set-top box 1020 is built in to the television, TV 560 is added to the set-top box 1020.

Furthermore, it should be noted that the processes described above using the accompanying flow charts, and the operation of recorder 540 (Fig. 5, Fig. 6) and recorder 1040 (Fig. 10), can be achieved as a computer written to perform the various operations. A computer program so comprised can be stored to any appropriate storage medium, including nonvolatile semiconductor memory devices such as flash ROM, volatile semiconductor memory devices such as DRAM, optical discs, and floppy disks and other magnetic storage media. Note, further, that the idea of a "storage medium" as used here includes storage devices for computers, for example, providing content via the Internet or other communication line. Therefore, a server that stores a computer program achieving the operation of the present invention and distributes this program to other terminal devices is also included within the scope of a data storage medium recording a computer program.

## Claims

1. A recording reservation system comprising:
a receiver apparatus (1020) and a recorder apparatus (1040) which are connected through a communication interface,
wherein said receiver apparatus (1020) comprises:
a decoder unit (604) for decoding a transport stream (TS) containing video data, audio data, and control data for a broadcast program, and extracting therefrom the control data and the video and audio data;
a program information extracting unit (606) for extracting program information from the control data extracted by the decoder unit;
a first communication interface unit (1028) for transmitting data including the extracted program information to said recorder apparatus (1040), and for receiving data from said recorder apparatus (1040); and
an OSD (On Screen Display) unit (620) for generating a video display signal including video data and a part of the program information for the reservation program, and outputting the video display signal to a display unit (560),
wherein said recorder apparatus (1040) comprises:
a second communication interface unit (1048) for receiving data including the extracted program information from the first communication interface unit of said receiver apparatus (1020), and for transmitting data to said receiver apparatus (1020);
a storage unit (614) for storing a program list containing a plurality of program information, each program information including a scheduled broadcast time for a scheduled broadcast program and an event ID for the program, the event ID being predetermined by a broadcast station before broadcasting and which identifies the scheduled broadcast program;
a reservation input unit (618) for a user to input reservation information identifying a scheduled broadcast time by time information to enable time-shift recording of a scheduled broadcast program as a reservation program;
a reservation manager (616) for extracting program information for the reservation program based on the program list and reservation information;
a recording manager (624) for monitoring the event ID of a scheduled broadcast program, recording the broadcast program as the reservation program based on the monitored results, and transmitting data including a part of the program information for the reservation program, through the second and first communication interfaces (1048, 1028) to the OSD unit (620), thereby displaying the part of the program information on the display unit (560).

2. A recording reservation system as described in claim 1,
wherein the program information further contains a broadcast channel number and title for the program.

3. A recording reservation system as described in claim 1 or claim 2,
wherein the recording manager (624) monitors a match between the reservation program event ID and the event ID of the broadcast program, and records the broadcast program as the reservation program when a match is detected.

4. A recording reservation system as described in any one of the preceding claims,
wherein the program information for the reservation program further contains information relating to the broadcast time and date of the reservation program,
wherein said reservation manager (616) sending the information relating to the broadcast time and date of the reservation program to the recording manager, and
wherein said recording manager (624) starting preparation for recording based on the information relating to the broadcast time and date of the reservation program.

5. A recording reservation method for use in a recording reservation system having a receiver apparatus (1020) and a recorder apparatus (1040) which are connected through a communication interface, the method comprising the steps of:
in said receiver apparatus (1020),
decoding a transport stream containing video data, audio data, and control data for a broadcast program, and extracting therefrom the control data and the video and audio data;
extracting program information from the control data;
transmitting data via a first communication interface unit (1028) including the extracted program information to said recorder apparatus (1040), and receiving data from said recorder apparatus (1040); and
generating a video display signal including video data and a part of the program information for the reservation program, and outputting the video display signal to a display unit (560), and
in said recorder apparatus (1040),
receiving data via the second communication interface unit (1048) including the extracted program information from the first communication interface unit of said receiver apparatus (1020), and transmitting data to said receiver apparatus (1020);
storing a program list containing a plurality of program information, each program information including a scheduled broadcast time for a scheduled broadcast program and an event ID for the program, the event ID being predetermined by a broadcast station before broadcasting and which identifies the scheduled broadcast program;
inputting reservation information identifying a scheduled broadcast time by time information to enable time-shift recording of a scheduled broadcast program as a reservation program;
extracting program information for the reservation program based on the program list and reservation information; and
monitoring the event ID of a scheduled broadcast program, recording the broadcast program as the reservation program based on the monitored results, and transmitting data including a part of the program information for the reservation program, through the second and first communication interfaces (1048, 1028) to the display unit (560) thereby displaying the part of the program information.

6. A recording reservation method as described in claim 5,
wherein the program information further contains a broadcast channel number and title for the program.

7. A recording reservation method as described in claim 5 or claim 6,
wherein in the recording manager (624), the monitoring step includes a monitoring a match between the reservation program event ID and the event ID of the broadcast program, and records the broadcast program as the reservation program when a match is detected.

8. A recording reservation method as described in any one of claims 5 to 7,
wherein the program information for the reservation program further contains information relating to the broadcast time and date of the reservation program,
wherein in said reservation manager (616), the extracting step includes a step of sending the information relating to the broadcast time and date of the reservation program to the recording manager, and
wherein in said recording manager (624), the monitoring step includes a step of starting preparation for recording based on the information relating to the broadcast time and date of the reservation program.

## Patentansprüche

1. System zum Vormerken einer Aufzeichnung, das enthält:
eine Empfangsvorrichtung (1020) und eine Aufzeichnungsvorrichtung (1040), welche durch ein Kommunikations-Interface verbunden sind,
wobei die Empfangsvorrichtung (1020) enthält:
eine Dekodierungseinheit (604) zum Dekodieren eines Transportstroms (TS), der Video-Daten, Audio-Daten und Steuerungsdaten für ein Ausstrahlungsprogramm enthält, und zum Entnehmen der Video-Daten, Audio-Daten und Steuerungsdaten aus diesem Transportstrom (TS);
eine Programminformationsentnahmeeinheit (606) zum Entnehmen der Programminformation aus den Steuerungsdaten, die durch die Dekodierungseinheit entnommen wurden;
eine erste Kommunikations-Interface-Einheit (1028) zum Übertragen von Daten, die die entnommenen Programminformationen umfassen, an die Aufzeichnungsvorrichtung (1040) und zum Empfangen von Daten von der Aufzeichnungsvorrichtung (1040); und
eine OSD (Bildschirmanzeige) Einheit (620) zum Erzeugen eines Videoanzeigesignals, das Videodaten und einen Teil der Programminformation für das vorgemerkte Programm umfasst, und zum Ausgeben des Videoanzeigesignals auf einer Anzeigeeinheit (560),
wobei die Aufzeichnungsvorrichtung (1040) enthält:
eine zweite Kommunikations-Interface-Einheit (1048) zum Empfangen der Daten, die die entnommenen Programminformationen von der ersten Kommunikations-Interface-Einheit der Empfangsvorrichtung (1020) enthalten, und zum Übertragen der Daten an die Empfangsvorrichtung (1020);
eine Speichereinheit (614) zum Speichern einer Programmliste, die eine Vielzahl von Programminformation beinhaltet, wobei jede Programminformation eine vorgesehene Ausstrahlungszeit für ein vorgesehenes Ausstrahlungsprogramm und eine Ereignis-ID für das Programm umfasst, wobei die Ereignis-ID durch eine Ausstrahlungsstation vor der Ausstrahlung vorherbestimmt ist und welche das vorgesehene Ausstrahlungsprogramm identifiziert;
eine Vormerkungseingabeeinheit (618) für einen Benutzer, um eine Vormerkungsinformation einzugeben, die eine vorgesehenen Ausstrahlungszeit durch eine Zeitinformation identifiziert, um eine zeitverschobene Aufzeichnung eines vorgesehenen Ausstrahlungsprogramms als ein vorgemerktes Programm zu ermöglichen;
einen Vormerkungsleiter (616) zum Entnehmen der Programminformation für das vorgemerkte Programm basierend auf der Programmliste und der Vormerkungsinformation;
einen Auszeichnungsleiter (624) zum Überwachen der Ereignis-ID eines vorgesehenen Ausstrahlungsprogramms, zum Aufzeichnen des Ausstrahlungsprogramms als das vorgemerkte Programm basierend auf den überwachten Ergebnissen und zum Übertragen von Daten, die einen Teil der Programminformation für das vorgemerkte Programm umfassen, mittels des zweiten und des ersten Kommunikations-Interfaces (1048, 1028) an die OSD-Einheit (620), wobei der Teil der Programminformation dabei auf der Anzeigeeinheit (560) angezeigt wird.

2. System zum Vormerken einer Aufzeichnung nach Anspruch 1,
wobei die Programminformation ferner eine Ausstrahlungskanalnummer und einen Titel des Programms enthält.

3. System zum Vormerken einer Aufzeichnung nach Anspruch 1 oder 2,
wobei der Aufzeichnungsleiter (624) eine Übereinstimmung zwischen der Ereignis-ID des vorgemerkten Programms und der Ereignis-ID des Ausstrahlungsprogramms überwacht und das Ausstrahlungsprogramm als das vorgemerkte Programm aufzeichnet, wenn eine Übereinstimmung festgestellt wird.

4. System zum Vormerken einer Aufzeichnung nach einem der vorherigen Ansprüche,
wobei die Programminformation für das vorgemerkte Programm ferner Information enthält, die sich auf die Ausstrahlungszeit und das Datum des vorgemerkten Programms bezieht,
wobei der Vormerkungsleiter (616) die Information, die sich auf die Ausstrahlungszeit und das Datum des vorgemerkten Programms bezieht, an den Aufzeichnungsleiter sendet, und
wobei der Aufzeichnungsleiter (624) die Vorbereitung zum Aufzeichnen basierend auf der Information startet, die sich auf die Ausstrahlungszeit und das Datum des vorgemerkten Programms bezieht.

5. Verfahren zum Vormerken einer Aufzeichnung zur Benutzung in einem System zum Vormerken einer Aufzeichnung, das eine Empfangsvorrichtung (1020) und eine Aufzeichnungsvorrichtung (1040) besitzt, welche durch ein Kommunikations-Interface verbunden sind, wobei das Verfahren die Schritte enthält:
in der Empfangsvorrichtung (1020),
Dekodieren eines Transportstroms (TS), der Video-Daten, Audio-Daten und Steuerungsdaten für ein Ausstrahlungsprogramm enthält, und Entnehmen der Video- Daten, Audio-Daten und Steuerungsdaten aus diesem Transportstrom (TS);
Entnehmen der Programminformation aus den Steuerungsdaten;
Übertragen von Daten, die die entnommenen Programminformationen umfassen, über eine erste Kommunikations-Interface-Einheit (1028) an die Aufzeichnungsvorrichtung (1040) und Empfangen von Daten von der Aufzeichnungsvorrichtung (1040); und
Erzeugen eines Videoanzeigesignals, das Videodaten und einen Teil der Programminformation für das vorgemerkte Programm umfasst, und Ausgeben des Videoanzeigesignals auf einer Anzeigeeinheit (560), und
in der Aufzeichnungsvorrichtung (1040),
Empfangen der Daten, die die entnommenen Programminformationen von der ersten Kommunikations-Interface-Einheit der Empfangsvorrichtung (1020) enthalten, über eine zweite Kommunikations-Interface-Einheit (1048) und Übertragen der Daten an die Empfangsvorrichtung (1020);
Speichern einer Programmliste, die eine Vielzahl von Programminformation beinhaltet, wobei jede Programminformation eine vorgesehene Ausstrahlungszeit für ein vorgesehenes Ausstrahlungsprogramm und eine Ereignis-ID für das Programm umfasst, wobei die Ereignis-ID durch eine Ausstrahlungsstation vor der Ausstrahlung vorherbestimmt ist und welche das vorgesehene Ausstrahlungsprogramm identifiziert;
Eingeben einer Vormerkungsinformation, die eine vorgesehenen Ausstrahlungszeit durch eine Zeitinformation identifiziert, um eine zeitverschobene Aufzeichnung eines vorgesehenen Ausstrahlungsprogramms als ein vorgemerktes Programm zu ermöglichen;
Entnehmen der Programminformation für das vorgemerkte Programm basierend auf der Programmliste und der Vormerkungsinformation; und
Überwachen der Ereignis-ID eines vorgesehenen Ausstrahlungsprogramms, Aufzeichnen des Ausstrahlungsprogramms als das vorgemerkte Programm basierend auf den überwachten Ergebnissen und Übertragen von Daten, die einen Teil der Programminformation für das vorgemerkte Programm umfassen, mittels des zweiten und des ersten Kommunikations-Interfaces (1048, 1028) an die Anzeigeeinheit (560),
wobei der Teil der Programminformation dabei angezeigt wird.

6. Verfahren zum Vormerken einer Aufzeichnung nach Anspruch 5,
wobei die Programminformation ferner eine Ausstrahlungskanalnummer und einen Titel des Programms enthält.

7. Verfahren zum Vormerken einer Aufzeichnung nach Anspruch 5 oder 6,
wobei in dem Aufzeichnungsleiter (624) der Überwachungsschritt eine Überwachung einer Übereinstimmung zwischen der Ereignis-ID des vorgemerkten Programms und der Ereignis-ID des Ausstrahlungsprogramms umfasst und das Ausstrahlungsprogramm als das vorgemerkte Programm aufzeichnet wird, wenn eine Übereinstimmung festgestellt wird.

8. Verfahren zum Vormerken einer Aufzeichnung nach einem der Ansprüche 5 bis 7,
wobei die Programminformation des vorgemerkten Programms ferner Information enthält, die sich auf die Ausstrahlungszeit und das Datum des vorgemerkten Programms bezieht,
wobei in dem Vormerkungsleiter (616) der Entnahmeschritt einen Schritt zum Senden der Information, die sich auf die Ausstrahlungszeit und das Datum des vorgemerkten Programms bezieht, an den Aufzeichnungsleiter umfasst, und
wobei in dem Aufzeichnungsleiter (624) der Überwachungsschritt einen Schritt zum Starten der Vorbereitung zum Aufzeichnen umfasst basierend auf der Information, die sich auf die Ausstrahlungszeit und das Datum des vorgemerkten Programms bezieht.

## Revendications

1. Système de réservation d'enregistrement comprenant :
un appareil de réception (1020) et un appareil d'enregistrement (1040) qui sont connectés à travers une interface de communication,
où ledit appareil de réception (1020) comprend :
une unité de décodage (604) pour décoder un flux de transport (TS) contenant des données vidéo, des données audio, et des données de commande pour un programme de diffusion, et en extraire les données de commande et les données vidéo et audio ;
une unité d'extraction d'information de programme (606) pour extraire une information de programme à partir des données de commande extraites par l'unité de décodage ;
une première unité d'interface de communication (1028) pour transmettre des données incluant l'information de programme extraite audit appareil d'enregistrement (1040), et pour recevoir des données à partir dudit appareil d'enregistrement (1040) ; et
une unité OSD (affichage à l'écran) (620) pour générer un signal d'affichage vidéo incluant des données vidéo et une partie de l'information de programme pour le programme de réservation, et envoyer le signal d'affichage vidéo à une unité d'affichage (560),
où ledit appareil d'enregistrement (1040) comprend :
une deuxième unité d'interface de communication (1048) pour recevoir des données incluant l'information de programme extraite à partir de la première unité d'interface de communication dudit appareil de réception (1020), et pour transmettre des données audit appareil de réception (1020) ;
une unité de stockage (614) pour stocker une liste de programmes contenant une pluralité d'informations de programmes, chaque information de programme incluant une heure de diffusion planifiée pour un programmée de diffusion programmé et un ID d'évènement pour le programme, l'ID d'évènement étant prédéterminé par une station de diffusion avant la diffusion et qui identifie le programme de diffusion programmé ;
une unité d'entrée de réservation (618) pour un utilisateur pour introduire une information de réservation identifiant une heure de diffusion programmée par une information horaire pour permettre un enregistrement décalé dans le temps d'un programme de diffusion programmé comme un programme de réservation ;
un gestionnaire de réservation (616) pour extraire une information de programme pour le programme de réservation sur la base de la liste de programmes et de l'information de réservation ;
un gestionnaire d'enregistrement (624) pour surveiller l'ID d'évènement d'un programme de diffusion programmé, enregistrer le programme de diffusion comme programme de réservation sur la base des résultats surveillés, et transmettre des données incluant une partie de l'information de programme pour le programme de réservation, à travers les deuxième et première interfaces de communication (1048, 1028) à l'unité OSD (620), affichant ainsi la partie de l'information de programme sur l'unité d'affichage (560).

2. Système de réservation d'enregistrement comme décrit dans la revendication 1,
dans lequel l'information de programme contient en plus un numéro de canal de diffusion et un titre pour leu programme.

3. Système de réservation d'enregistrement comme décrit dans la revendication 1 ou la revendication 2,
dans lequel le gestionnaire d'enregistrement (624) surveille une concordance entre l'ID d'évènement de programme de réservation et l'ID d'évènement du programme de diffusion, et enregistre le programme de diffusion comme programme de réservation dès qu'une concordance est détectée.

4. Système de réservation d'enregistrement comme décrit dans l'une quelconque des revendications précédentes,
dans lequel l'information de programme pour le programme de réservation contient en plus une information se rapportant à l'heure et à la date de diffusion du programme de réservation,
dans lequel ledit gestionnaire de réservation (616) envoie l'information se rapportant à l'heure et à la date de diffusion du programme de réservation au gestionnaire d'enregistrement, et
dans lequel ledit gestionnaire d'enregistrement (624) commence à se préparer pour l'enregistrement sur la base de l'information se rapportant à l'heure et à la date de diffusion et du programme de réservation.

5. Procédé de réservation d'enregistrement pour utilisation dans un système de réservation d'enregistrement ayant un appareil de réception (1020) et un appareil d'enregistrement (1040) qui sont connectés à travers une interface de communication, le procédé comprenant les étapes de :
dans ledit appareil de réception (1020),
décoder un flux de transport contenant des données vidéo, des données audio, et des données de commande pour un programme de diffusion, et en extraire les données de commande et les données vidéo et audio ;
extraire une information de programme à partir des données de commande ;
transmettre des données à travers une première unité d'interface de communication (1028) incluant l'information de programme extraite audit appareil d'enregistrement (1040), et recevoir des données à partir dudit appareil d'enregistrement (1040) ; et
générer un signal d'affichage vidéo incluant des données vidéo et une partie de l'information de programme pour le programme de réservation, et envoyer le signal d'affichage vidéo à une unité d'affichage (560), et
dans ledit appareil d'enregistrement (1040),
recevoir des données à travers la deuxième unité d'interface de communication (1048) incluant l'information de programme extraite à partir de la première unité d'interface de communication dudit appareil de réception (1020), et transmettre les données audit appareil de réception (1020) ;
stocker une liste de programmes contenant une pluralité d'informations de programmes, chaque information de programme incluant une heure de diffusion programmée pour un programme de diffusion programmé et un ID d'évènement pour le programme, l'ID d'évènement étant prédéterminé par une station de diffusion avant la diffusion et qui identifie le programme de diffusion programmé ;
faire entrer une information de réservation identifiant une heure de diffusion programmée par une information horaire pour permettre un enregistrement décalé dans le temps d'un programme de diffusion programmé comme programme de réservation ;
extraire une information de programme pour le programme de réservation sur la base de la liste de programmes et de l'information de réservation ; et
surveiller l'ID d'évènement d'un programme de diffusion programmé, enregistrer le programme de diffusion comme programme de réservation sur la base des résultats surveillés, et transmettre des données incluant une partie de l'information de programme pour le programme de réservation, à travers les deuxième et première interfaces de communication (1048, 1028) à l'unité d'affichage (560), affichant ainsi la partie de l'information de programme.

6. Procédé de réservation d'enregistrement comme décrit dans la revendication 5,
dans lequel l'information de programme contient en plus un numéro de canal de diffusion et un titre pour le programme.

7. Procédé de réservation d'enregistrement comme décrit dans la revendication 5 ou la revendication 6,
dans lequel le gestionnaire d'enregistrement (624), l'étape de surveillance inclut une surveillance d'une concordance entre l'ID d'évènement de programme de réservation et l'ID d'évènement du programme de diffusion, et enregistre le programme de diffusion comme programme de réservation dès qu'une concordance est détectée.

8. Procédé de réservation d'enregistrement comme décrit dans l'une quelconque des revendications 5 à 7,
dans lequel l'information de programme pour le programme de réservation contient en plus une information se rapportant à l'heure et à la date de diffusion du programme de réservation,
dans lequel dans ledit gestionnaire de réservation (616), l'étape d'extraction inclut une étape d'envoie de l'information se rapportant à l'heure et à la date de diffusion du programme de réservation au gestionnaire d'enregistrement, et
dans lequel dans ledit gestionnaire d'enregistrement (624), l'étape de surveillance inclut une étape de début de préparation de l'enregistrement sur la base de l'information se rapportant à l'heure et à la date de diffusion du programme de réservation.
